Europäisches Patentamt

European Patent Office

Office européen des brevets

(19)

(11) Numéro de publication: **0 307 383**
A1

## (12) DEMANDE DE BREVET EUROPEEN

(21) Numéro de dépôt: **88870138.0**

(22) Date de dépôt: **26.08.88**

(51) Int. Cl.⁴: **H 02 J 3/14**
H 02 H 3/033

(30) Priorité: **11.09.87 BE 8701022**

(43) Date de publication de la demande:
**15.03.89 Bulletin 89/11**

(84) Etats contractants désignés:
**AT CH DE ES FR GB IT LI NL**

(71) Demandeur: **TECO S.A.**
**Rue Servais Malaise, 29**
**B-4030 Bois-de-Breux (BE)**

(72) Inventeur: **Bonameau, Jean-Marie**
**Rue Servais Malaise, 29**
**B-4030 Bois-de-Breux (BE)**

(74) Mandataire: **Vanhamme, Joseph Louis**
**Office Parette (Fred Maes) 33 Avenue d'Auderghem Boîte 4**
**B-1040 Bruxelles (BE)**

(54) **Procédé de gestion de puissance électrique d'un réseau électrique et système pour la mise en oeuvre de ce procédé.**

(57) Ce système est caractérisé en ce qu'il comprend un système de gestion pour la mise en oeuvre du procédé selon l'une des revendications 1 à 3, caractérisé en ce qu'il comprend un générateur (6) de signaux de gestion avantageusement programmable, qui est adapté pour injecter les signaux en série entre chaque conducteur actif (5) auquel un appareil électrique (4) est relié et la terre. et des circuits bouchons (4) adaptés pour empêcher la propagation des signaux dans le réseau (1).

FIG. 1

EP 0 307 383 A1

Bundesdruckerei Berlin

## Description

**Procédé de gestion de puissance électrique d'un réseau électrique et système pour la mise en oeuvre de ce procédé**

La présente invention concerne un procédé de gestion de la puissance électrique en provenance du réseau électrique qui peut être consommé dans une installation électrique d'une station telle qu'une habitation munie d'un certain nombre d'appareils électriques tels qu'appareils de chauffage, appareils électroménagers ou analogue, et un système pour la mise en oeuvre de ce procédé.

Des procédés et systèmes de ce type sont déjà connus. Mais ils présentent l'inconvénient majeur d'être compliqués à mettre en oeuvre, de présenter une structure complexe et de nécessiter des travaux considérables d'adaptation à l'installation existante.

La présente invention a pour but de proposer une solution simple au problème posé.

Pour atteindre ce but, le procédé selon l'invention est caractérisé en ce que l'on limite automatiquement la puissance électrique pouvant être consommée dans l'installation à un seuil prédéterminé par une distribution de la puissance disponible aux appareils à alimenter selon des priorités prédéterminées.

Selon une caractéristique avantageuse de l'invention on respecte ledit seuil en faisant une sélection des appareils à alimenter selon des priorités prédéterminées.

Selon encore une autre caractéristique de l'invention, on prévoit une réduction automatique de la puissance à consommer à un seuil minimum indispensable en cas d'un danger de coupure forcée du réseau.

Un système de gestion pour la mise en oeuvre du procédé selon l'invention est caractérisé en ce qu'il comprend un dispositif générateur de signaux de gestion, avantageusement programmable, qui est adapté pour injecter les signaux en série entre chaque conducteur actif auquel un appareil électrique est relié et la terre, et des circuits bouchons adaptés pour empêcher la propagation des signaux dans le réseau.

Selon une caractéristique avantageuse du système selon l'invention, le dispositif générateur comporte un transformateur dont l'enroulement primaire est attaqué par lesdits signaux à transmettre, tandis qu'un enroulement secondaire est constitué par l'ensemble des conducteurs actifs de l'installation.

Selon une autre caractéristique avantageuse de ce système, les signaux électriques à transmettre sont des signaux binaires, formés par modulation en fréquence d'une onde porteuse et les circuits bouchons sont formés par des circuits à résonance avantageusement en série, qui sont accordés sur la fréquence de l'onde porteuse et montés entre chaque conducteur et la terre.

Selon encore une autre caractéristique avantageuse de l'invention, les récepteurs des signaux de gestion, associés aux appareils, présentent une impédance élevée à la fréquence de l'onde porteuse entre les conducteurs et la terre.

Deux modes de réalisation :

La figure 1 est un schéma-bloc d'un premier mode de réalisation d'un système selon la présente invention ;

La figure 2 est un schéma de circuit équivalent au schéma-bloc de la figure 1, et

La figure 3 est un schéma-bloc d'un deuxième mode de réalisation d'un système selon l'invention.

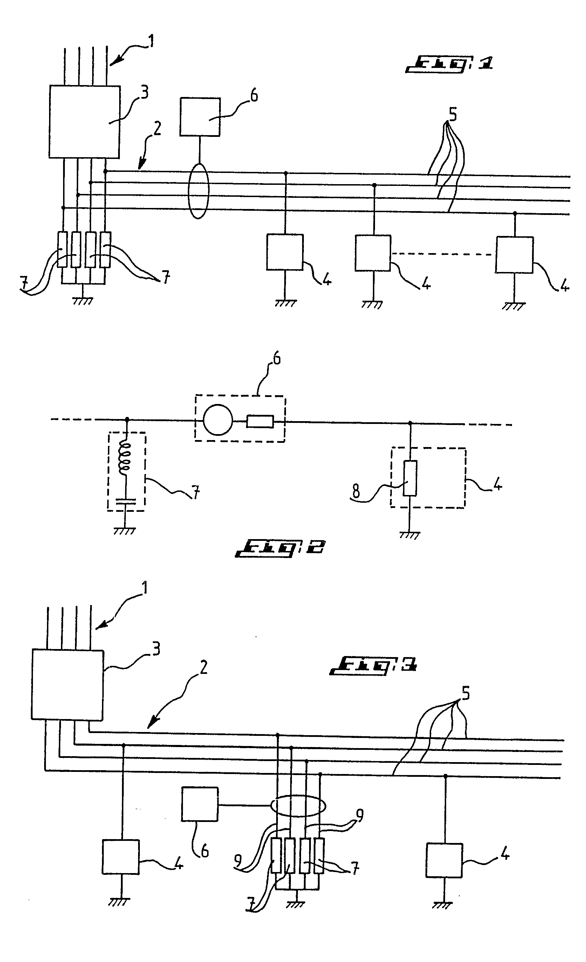

A la figure 1 les références 1, 2 et 3 désignent respectivement le réseau de distribution de l'énergie électrique, l'installation consommatrice de cette énergie et le dispositif de branchement de l'installation 2 au réseau. Cette installation comporte un certain nombre d'appareils électriques désignés en 4, qui sont raccordés à des conducteurs actifs 5 formés par les trois conducteurs de phase et le conducteur neutre, la terre servant de conducteur de référence.

Un système pour la gestion de l'alimentation en puissance électrique des appareils 4 qui peuvent être des appareils de chauffage, électroménagers ou analogue comprend essentiellement un dispositif de gestion 6 qui est adapté pour envoyer des signaux de télécommande aux différents appareils électriques 4. Ces signaux sont acheminés à travers l'installation électrique existante, c'est-à-dire via les conducteurs actifs 5. Aucun changement du câblage de l'installation n'est nécessaire. Les signaux de télécommande sont des signaux logiques, c'est-à-dire binaires, et obtenus par modulation en fréquence d'une onde porteuse d'une fréquence $f_0$, avant d'être transmis au conducteur 5. Les deux états des signaux correspondent à des fréquences $f_0 + \Delta f$ et $f_0 - \Delta f$.

Le dispositif générateur 6 comprend à sa sortie un transformateur (non représenté) dont l'enroulement primaire est attaqué par les signaux de télécommande modulés en fréquence et qui présente une amplitude par exemple de 10 volts crête à crête. Le côté secondaire du transformateur est constitué par l'ensemble des conducteurs actifs pris en un endroit le plus proche possible du branchement 3 de l'installation 2.

Pour éviter que les signaux de télécommande ainsi injectés sur l'installation parviennent dans le réseau 1, le système selon l'invention prévoit des circuits bouchons 7 dont chacun est formé par un circuit à résonance accordé sur la fréquence $f_0$ de l'onde porteuse et présentant une impédance très faible pour les signaux injectés de façon à court-circuiter ceux-ci à la terre. Comme le montre la figure, un tel circuit résonnant est relié entre chacun des conducteurs actifs 5 et la terre. En plus de leur rôle de filtre susceptible d'empêcher les signaux de télécommande de se transmettre en amont du branchement 3, ils ont comme deuxième fonction d'assurer la fermeture du circuit électrique parcouru par les signaux de télécommande, comme cela est illustré par la figure 2.

Concernant les appareils électriques auxquels les signaux de télécommande sont destinés, ils comportent des moyens récepteurs présentant essentiellement une impédance 8 élevée à la fréquence des signaux et reliée entre un conducteur actif 5 et la terre, comme cela ressort également de la figure 2. Cette figure démontre qu'il s'agit bien d'un mode de transmission de signaux en série.

La figure 3 montre un deuxième mode de réalisation d'un système selon l'invention qui présente l'avantage que le transformateur d'injection peut être placé sur les câbles de raccordement 9 du dispositif de circuits bouchons 7 et non plus sur les câbles de puissance 5 de l'installation, comme dans le cas de la figure 1. Dans le mode selon la figure 3 le transformateur peut être plus petit en raison de la plus faible section transversale des câbles de raccordement, par rapport aux câbles de puissance. On constate ainsi que le système selon le second mode de réalisation est plus simple à câbler mais nécessite la présence au branchement 3 de l'installation 2 soit d'un transformateur basse tension, soit d'un filtre série qui empêche que les signaux de télécommande puissent parvenir en amont du branchement. Dans le système selon la figure 3, l'injecteur peut être placé à n'importe quel endroit de l'installation et la transmission peut être bi-directionnelle. Dans ce cas, les récepteurs seraient munis d'un émetteur.

Il est à noter que le dispositif de gestion 6 qui engendre les signaux de télécommande permettant la gestion de la consommation de l'énergie électrique dans l'installation 2 peut être programmable et à cet fin équipé d'un micro-processeur formant module de gestion pouvant communiquer avec l'extérieur pour recevoir les informations relatives aux températures extérieure et intérieure aux locaux dans lesquels le système est installé. A l'aide d'un clavier il est possible de programmer le module. Celui-ci peut également être adapté de façon à pouvoir recevoir des signaux en provenance du dispositif de branchement 3. Dans cette version de dispositif de gestion plus perfectionné, le dispositif de gestion 6 pourrait adresser sélectivement les différents appareils électriques 4. A cette fin on pourrait associer aux signaux de télécommande des codes d'identification d'appareils et équiper la partie réceptrice de chaque appareil de moyens lui permettant de reconnaître son code d'identification, comme cela est connu en soi.

Le système selon l'invention permet une gestion optimale de la puissance électrique disponible et permet d'obtenir que la demande d'énergie soit aussi constante que possible. Ce résultat est obtenu par une gestion de la courbe de charge. L'invention permet d'étaler les pointes de consommation d'énergie électrique en déplaçant autant que possible l'utilisation de l'énergie vers des périodes de moindre charge. Le grand avantage de l'invention réside dans le fait que le système permet d'assurer automatiquement et de façon permanente une gestion optimale. Le système de gestion selon l'invention gére l'installation électrique en permettant de programmer la température de chaque pièce de l'habitation ainsi que la mise en marche des appareils électro- domestiques, optimisant ainsi la consommation d'énergie électrique, c'est-à-dire la réduisant au minimum nécessaire à la réalisation du confort souhaité. Le système selon l'invention gère la consommation d'énergie électrique et la charge. Ce dernier aspect permet de limiter la puissance de raccordement électrique en évitant des pointes de charge excessives et souvent exceptionnelles, provoquées par la coïncidence de l'utilisation et du fonctionnement des divers appareils électrique, tout en assurant un confort constant.

Le système selon l'invention permet d'obtenir un autre effet très avantageux, en raison de la possibilité qu'elle offre de gérer la courbe de charge. L'invention permet deux actions qui sont initialisées par des signaux qui arrivent au dispositif de gestion 6 via le réseau électrique, comme c'est le cas pour l'allumage de l'éclairage public et pour les changements de tarif jour-nuit. En période de disponibilité réduite de puissance électrique, appelé régime de puissance souscrite réduite, l'invention permet de limiter automatiquement la puissance demandée à un seuil plus faible prédéterminé, par exemple par sélection des appareils à alimenter selon des priorités prédéterminées et, le cas échéant, à convenir entre l'utilisateur et les services producteurs-distributeurs d'électricité, tout en assurant le maintien d'un confort global. On déplacera la charge ainsi vers les heures creuses, c'est-à-dire de plus faible charge. Le système selon l'invention permet d'assurer également une protection contre des interruptions de fourniture d'énergie électrique à la suite d'un effondrement du réseau. Le système selon l'invention pourrait être programmé pour réduire dans un tel cas automatiquement la consommation à un stricte minimum, ce qui permettrait de maintenir en état de fonctionnement des appareils électriques que l'on considère, selon un accord préalable, comme indispensables. Ainsi on pourrait assurer dans des logements un éclairage minimal.

Le système selon l'invention permet également d'éviter le problème d'une surcharge à la suite d'une coupure ou d'une brusque réduction d'énergie électrique disponible au réseau. En effet, il est bien connu que les utilisateurs dans un tel cas ont l'habitude fâcheuse "d'ouvrir" tous les appareils de façon qu'à la reprise du réseau celui-ci se trouve confronté à une demande trop élevée provoquant un nouveau effondrement du réseau. Par son action automatique de gestion de la consommation d'énergie en réponse à de tels évènements extérieurs, ces phénomènes qui normalement retardent la restauration d'un régime de distribution de puissance normale peuvent sûrement évités.

Le système selon l'invention, en plus des avantages de gestion qu'il procure, est également très avantageux du point de vue technique.

Les circuits bouchons en tête de l'installation n'étant pas traversés par le courant principal, ils peuvent être construits très aisément. Les charges raccordées sur les lignes d'alimentation et en particulier les dispositifs d'anti-parasitage, qui n'influencent pas considérablement l'impédance homopolaire, n'atténuent guère les signaux de télécommande, ce qui permet de limiter considérablement le niveau d'émission. En effet, on passe de quelques volts dans le cas d'une injection parallèle à 800 millivolts. Le signal étant injecté sur tous les conducteurs actifs par rapport à la terre, il est reçu en tout point de l'installation. Le système ne nécessite donc pas de moyens de couplage entre phases.

Le système de l'invention est notamment appliquable pour des installations domestiques où le premier mode de réalisation selon la figure 1 est directement utilisable (habitation particulière, appartement, immeuble etc...). Ces installations ne nécessitent pas de transmission bidirectionnelle. L'invention peut être utilisée aussi dans des installations plus importante, tels que des bâtiments administratifs industriels etc.... Dans ces cas, le deuxième mode de réalisation permettrait des transmissions bi-directionnelles.

**Revendications**

1. Procédé de gestion de la puissance électrique en provenance du réseau électrique, qui peut être consommée dans une installation électrique d'une station telle qu'une habitation munie d'un certain nombre d'appareils électriques tels qu'appareils de chauffage, appareils électro-ménagers ou analogue, caractérisé en ce que l'on limite automatiquement la puissance électrique pouvant être consommée dans l'installation à un seuil prédéterminé par une distribution de la puissance disponible aux appareils à alimenter, selon des priorités prédéterminées.

2. Procédé selon la revendication 1, caractérisé en ce que l'on respecte le seuil précité en faisant une sélection des appareils à alimenter selon des priorités prédéterminées.

3. Procédé selon l'une des revendications 1 ou 2, caractérisé en ce que l'on prévoit une réduction automatique de la puissance à consommer à un seuil minimum indispensable en cas d'un danger de coupure forcée du réseau.

4. Système de gestion pour la mise en oeuvre du procédé selon l'une des revendications 1 à 3, caractérisé en ce qu'il comprend un générateur (6) de signaux de gestion, avantageusement programmable, qui est adapté pour injecter les signaux en série entre chaque conducteur actif (5) auquel un appareil électrique (4) est relié et la terre et des circuits bouchons (7) adaptés pour empêcher la propagation des signaux dans le réseau (1).

5. Système selon la revendication 4, caractérisé en ce que le dispositif générateur (6) comporte un transformateur dont l'enroulement primaire est attaqué par les signaux à transmettre, tandis qu'un enroulement secondaire est constitué par l'ensemble des conducteurs actifs (5) de l'installation (2).

6. Système selon l'une des revendications 4 ou 5, caractérisé en ce que les signaux électriques à transmettre sont des signaux binaires, formés par modulation en fréquence d'une onde porteuse, et les circuits bouchons (7) sont formés par des circuits résonnants, avantageusement en série, qui sont accordés sur la fréquence de l'onde porteuse et montés entre chaque conducteur (5) et la terre.

7. Système selon la revendication 6, caractérisé en ce que les récepteurs des signaux de télécommande, associés aux appareils électriques 4, présente une impédance (8) élevée à la fréquence de l'onde porteuse, entre les conducteurs (5) et la terre.

8. Système selon l'une des revendications 4 à 7, caractérisé en ce qu'un récepteur associé à un appareil électrique (4) est sélectivement adressable grâce à des codes d'identification des récepteurs, compris dans les signaux de télécommande et reconnaissables par les récepteurs.

9. Système selon l'une des revendications 4 à 8, caractérisé en ce que le transformateur 6 d'injection de signaux est placé sur les câbles de raccordement (9) du dispositif de circuits bouchons (7), et le dispositif de branchement (3) de l'installation (2) au réseau (1) comprend des moyens empêchant la transmission des signaux de télécommande en amont du branchement, tel qu'un transformateur basse tension ou un filtre en série

10. Système selon la revendication 7, caractérisé en ce que la transmission peut être bidirectionnelle et les récepteurs sont munis à cette fin de moyens émetteurs.

11. Système selon l'une des revendications 4 à 10, caractérisé en ce que le dispositif générateur des signaux de gestion (6) est adapté pour recevoir des signaux de commande en provenance du réseau (1).

Fig. 1

Fig. 2

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 002 621  (HILBERG) <br> * Revendications 1,2,6,8 * | 1-3 | H 02 J    3/14 <br> H 02 H    3/033 |
| Y |  | 4-6 | |
| | --- | | |
| Y | EP-A-0 020 310  (SPENA) <br> * En entier * | 4-6 | |
| | --- | | |
| A | US-A-4 612 619  (CULP) <br> * Figure 1; abrégé * | 1-7 | |
| | --- | | |
| A | US-A-4 213 182  (EICHELBERGER et al.) <br> * Figure 1; abrégé * | 1-7 | |
| | --- | | |
| A | US-A-4 360 881  (MARTINSON) <br> * Figures 1-3; abrégé; revendication 1 * | 1-7 | |
| | --- | | |
| A | EP-A-0 062 871  (WESTINGHOUSE) <br> * Figure 1; abrégé; page 1, ligne 1; page 2, ligne 9 * | 1-7 | |
| | ----- | | |

DOMAINES TECHNIQUES
RECHERCHES (Int. Cl.4)

H 02 H
H 02 J
G 06 F

Le présent rapport a été établi pour toutes les revendications

| Lieu de la recherche | Date d'achèvement de la recherche | Examinateur |
|---|---|---|
| LA HAYE | 28-11-1988 | KOLBE W.H. |

EPO FORM 1503 03.82 (P0402)